# EUROPEAN PATENT SPECIFICATION

(11) **EP 4 546 531 B1**
(45) Date of publication and mention of the grant of the patent: **15.04.2026**
(21) Application number: 22955328.4
(22) Date of filing: 18.08.2022
(51) Int. Cl.: B60K 1/04, H01M 50/249, H01M 50/209, H01M 50/244, H01M 50/262, H01M 50/242

(54) **BATTERY BOX, BATTERY AND VEHICLE**
BATTERIEKASTEN, BATTERIE UND FAHRZEUG
BOÎTIER DE BATTERIE, BATTERIE ET VÉHICULE

(43) Date of publication of application: 30.04.2025
(73) Proprietor: Contemporary Amperex Technology Co., Limited, Ningde, Fujian 352100 (CN)
(72) Inventor: HE, Runyong, Ningde, Fujian 352100 (CN); CHEN, Xingdi, Ningde, Fujian 352100 (CN); WANG, Peng, Ningde, Fujian 352100 (CN); LONG, Chao, Ningde, Fujian 352100 (CN)
(74) Representative: Ziebig Hengelhaupt Intellectual Property Attorneys Patentanwaltskanzlei PartGmbB
(86) International application number: PCT/CN2022/113185
(87) International publication number: WO 2024/036548

(56) References cited:
- CN-U- 206 067 523
- CN-U- 207 199 691
- CN-U- 210 212 529
- CN-U- 210 212 529
- CN-U- 213 768 245
- CN-U- 213 768 245
- US-B2- 11 110 786

## Description

### TECHNICAL FIELD

The present invention relates to the technical field of batteries, and in particular, to a battery box, a battery and a vehicle.

### BACKGROUND

With energy saving and emission reduction being the key to the sustainable development of the automobile industry, electric vehicles have become an important part of the sustainable development of the automobile industry due to their advantages of energy saving and environmental protection. For electric vehicles, a battery technology is an important factor related to their development.

However, a traditional battery is generally suspended under a vehicle body as an independent sealed unit. Such arrangement greatly limits an overall space of the battery and increases the weight of the entire vehicle.

US11110786 B2 discloses an example of a battery box with a cantilever structure.

### SUMMARY OF THE INVENTION

Based on this, it is necessary to provide a battery box, a battery and a vehicle, which increase the arrangement space of the battery and reduce the weight of the entire vehicle.

In a first aspect, the present invention provides a battery box, including: a box body, where the interior of the box body is configured to accommodate a battery cell; a cantilever structure arranged on the box body, where the cantilever structure is configured to be connected to a front axle and/or rear axle of a vehicle.

In the above battery box, the cantilever structure is arranged on the box body, so that a structure capable of being connected to the front axle or rear axle is integrated on the box body, thereby enriching an installation function of the battery box. When the battery box is installed in the vehicle, it is no longer an independent unit suspended under the vehicle body. The battery box uses its own cantilever structure to participate in installation of the front axle or rear axle. In this way, there is no need to add additional beam structures in the vehicle to support the front axle or rear axle, which simplifies a beam structure design in the vehicle and therefore increases the arrangement space for the battery box on the entire vehicle. At the same time, the cantilever structure connected to the front axle or rear axle is integrated into the battery box, thereby making the structural arrangement more compact and being beneficial to reducing the weight of the entire vehicle.

According to the invention the cantilever structure is arranged at at least one end of the box body along a first direction, and the cantilever structure extends along the first direction and towards a side away from the box body. In this way, the cantilever structure extends along the first direction towards the outside of the box body, so that when the battery box is installed on the vehicle, the cantilever structure can extend to the front axle or rear axle, thereby ensuring stable fixation of the front axle or rear axle.

According to the invention the cantilever structure includes a first cantilever structure, where the first cantilever structure is configured to be connected to the front axle. In this way, the first cantilever structure is connected to the front axle, so that the front axle is stably fixed to ensure stable operation of the vehicle.

According to the invention the first cantilever structure includes two first cantilever beams, where the two first cantilever beams are arranged on the box body at an interval along a second direction, the two first cantilever beams are both configured to be connected to the front axle, and the second direction intersects with the first direction. Therefore, the first cantilever structure is designed to be the two first cantilever beams that are relatively spaced apart, to be adapted to two suspensions on the front axle, which ensures support balance on the front axle and improves structural stability of the vehicle.

According to the invention an installation platform is arranged on each of the first cantilever beams, with a mating hole being provided in the installation platform, and the mating hole is configured to install the front axle. In this way, the installation platform is arranged on the first cantilever beam, and the mating hole is provided in the installation platform, so that when being installed on the first cantilever beam, the suspension can be installed and positioned by penetrating into the mating hole, which is more convenient to install and operate, and is beneficial to improving assembly efficiency of the entire vehicle.

According to the invention the installation platform is arranged at one end of the first cantilever beam close to the box body. Such a design is beneficial to reducing torque of the installation platform on the first cantilever beam and ensuring stable and firm installation of the front axle.

In some embodiments, a reinforcing rib is arranged on the installation platform, and the reinforcing rib extends on the surface of the installation platform in a direction away from the first cantilever beam. In this way, the reinforcing rib is arranged on the installation platform, which improves overall structural strength of the installation platform, and ensures more stable installation of the front axle.

In some embodiments, two side surfaces of the box body along the second direction are defined as two beam side surfaces respectively, and projections of the two first cantilever beams on the box body along the first direction are both between the two beam side surfaces. In this way, the first cantilever beam is designed not to exceed the corresponding beam side surface in the second direction, so that the two first cantilever beams are limited between the two beam side surfaces, the transverse dimension of the battery box in the second direction is reduced, and the overall structure of the battery box is prevented from becoming bloated.

In some embodiments, a minimum distance between the first cantilever beam and the beam side surface relatively close to the first cantilever beam in the second direction is W, and 50 millimeters (mm) ≤ W ≤ 500 mm. In this way, the distance W between the first cantilever beam and the beam side surface is rationally controlled, which not only makes the structure more compact, but also is beneficial to improving anti-torsion performance of the first cantilever structure.

In some embodiments, a transition portion is connected between the first cantilever beam and the box body, the transition portion extends in a circular arc from the first cantilever beam to the beam side surface, and the transition portion is recessed towards the first cantilever beam. In this way, the transition portion is designed to transition in a circular arc from the first cantilever beam to the beam side surface, which ensures that a force on the first cantilever beam is effectively transferred to a side edge of the box body, and avoids a battery structure from being damaged and deformed due to an impact force directly acting on the middle of the box body.

In some embodiments, the box body includes a beam top surface arranged along a third direction, each of the first cantilever beams is arranged beyond the beam top surface in the third direction, and the first direction, the second direction and the third direction intersect with each other. In this way, the first cantilever beam is designed to extend beyond the beam top surface, which effectively increases a height of the first cantilever beam, makes the suspension on the front axle act on the front axle more easily, and ensures structural stability.

In some embodiments, a distance between the top of the first cantilever beam and the beam top surface is h, and 50 mm ≤ h ≤ 400 mm. In this way, the distance h between the first cantilever beam and the beam top surface is reasonably controlled, so that the front axle can be more stably fixed on the first cantilever beam, thereby improving the structural stability of the entire vehicle.

In some embodiments, the first cantilever beam includes a first supporting section and a first mounting section in sequence along the first direction, where the first supporting section is configured to be connected to the front axle, and the first mounting section extends in a direction away from the first supporting section. In this way, the first cantilever beam is designed to be the first supporting section and the first mounting section, so that a supporting function and a mounting function of the first cantilever beam are distributed in different positions, and therefore each function is carried out in an orderly manner and the structural arrangement is more reasonable.

In some embodiments, the first cantilever structure further includes a first cross beam, where the first cross beam is connected between the two first cantilever beams. In this way, the first cross beam is arranged between the two first cantilever beams, which provides a supporting force between the two first cantilever beams, and is beneficial to improving side collision resistance performance of the first cantilever structure.

In some embodiments, the cantilever structure further includes a second cantilever structure, where the second cantilever structure is configured to be connected to the rear axle. In this way, the second cantilever structure is connected to the rear axle, so that the rear axle is stably fixed to ensure the stable operation of the vehicle.

In some embodiments, the cantilever structure further includes a second cantilever structure, where the second cantilever structure is connected to one end of the box body facing away from the first cantilever structure, and the second cantilever structure is configured to be connected to the rear axle. In this way, the first cantilever structure and the second cantilever structure are arranged on the box body respectively, so that installation positions of the front axle and the rear axle are integrated on the box body, which greatly simplifies a beam structure design in the vehicle, and increases the arrangement space for the battery box on the entire vehicle.

In some embodiments, the second cantilever structure includes two second cantilever beams, where the two second cantilever beams are arranged on the box body at an interval, and the two second cantilever beams are both configured to be connected to the rear axle. In this way, the second cantilever structure is designed to be the two second cantilever beams that are relatively spaced apart, to be adapted to two suspensions on the rear axle, which ensures support balance on the rear axle and improves the structural stability of the vehicle.

In some embodiments, the second cantilever structure further includes a second cross beam, where the second cross beam is connected between the two second cantilever beams. In this way, the second cross beam is arranged between the two second cantilever beams to provide a supporting force between the two second cantilever beams, which is beneficial to improving side collision resistance performance of the second cantilever structure.

In some embodiments, the second cantilever structure includes a second supporting section and a second mounting section in sequence along the first direction, where the second supporting section is configured to be connected to the front axle, and the second mounting section extends in a direction away from the second supporting section. In this way, the second cantilever beam is designed to be the second supporting section and the second mounting section, so that a supporting function and a mounting function of the second cantilever beam are distributed in different positions, and therefore each function is carried out in an orderly manner and the structural arrangement is more reasonable.

In a second aspect, the present invention provides a battery, including a battery cell and the battery box according to any of the above items, where the battery cell is accommodated in the box body.

In a third aspect, the present invention provides a vehicle, including the above battery.

The above description is only a summary of the technical solutions of the present invention. In order to be able to understand the technical means of the present application more clearly, and the technical means can be implemented according to the content of the specification, furthermore, in order to make the above and other objectives, features and advantages of the present invention more obvious and understandable, specific implementations of the present invention are exemplified below.

### DESCRIPTION OF DRAWINGS

By reading the detailed description of the preferred implementations below, various other advantages and benefits will become apparent to those of ordinary skill in the art. The drawings are for the purpose of illustrating the preferred implementations only and are not to be considered a limitation to the present invention, that is defined and limited only by the scope of the appended claims. Moreover, in all of the drawings, the same components are indicated by the same reference numerals. In the drawings:
FIG. 1 is a schematic diagram of a structure of a vehicle according to some embodiments of the present invention;
FIG. 2 is a cross-sectional view of a structure of a battery according to some embodiments of the present invention;
FIG. 3 is a schematic diagram of a structure of a battery according to some embodiments of the present invention;
FIG. 4 is a first schematic diagram of a partial structure of a battery according to some embodiments of the present invention;
Fig. 5 is a second schematic diagram of a partial structure of a battery according to some embodiments of the invention; and
FIG. 6 is a schematic diagram of a partial structure of a battery with a first cross beam according to some embodiments of the present invention.
1000, vehicle; 100, battery; 200, controller; 300, motor; 10, battery box; 11, box body; 111, first portion; 112, second portion; 113, beam side surface; 114, beam top surface; 115, frame; 12, cantilever structure; 13, first cantilever structure; 131, first cantilever beam; 131a, first supporting section; 131b, first mounting section; 132, first cross beam; 133, installation platform; 133a, mating hole; 133b, reinforcing rib; 134, transition portion; 14, second cantilever structure; 141, second cantilever beam; 141a, second supporting section; 141b, second mounting section; 142, second cross beam; 20, battery cell; X, first direction; Y, second direction; Z, third direction.

### DETAILED DESCRIPTION

Embodiments of the technical solutions of the present invention will be described in detail below with reference to the accompanying drawings. The following embodiments are only used to more clearly illustrate the technical solution of the present invention, and therefore are only used as examples and cannot be used to limit the scope of protection of the present invention. The scope of protection of the present invention is defined and limited only by the scope of the appended claims.

Unless otherwise defined, all technical and scientific terms used herein have the same meanings as those commonly understood by those skilled in the art to which the present invention pertains to. the terms used herein are for the purpose of describing specific embodiments only, and are not intended to limit the present application. The terms "including" and "having" and any variations thereof in the description and claims of the present application and the aforementioned description of the drawings are intended to cover non-exclusive inclusion.

In the description of the embodiments of the present invention, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present invention, the meaning of "a plurality of" is two or more, unless otherwise explicitly and specifically defined.

Reference herein to "an embodiment" means that a particular feature, structure, or characteristic described in connection with the embodiment can be included in at least one embodiment of the present invention. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present invention, the term "and/or" is simply a description of an association of associated objects, which indicates that there may exist three relationships, for example, A and/or B may represent three situations: A exists alone, both A and B exist, and B exists alone. Moreover, the character "/" herein generally indicates that the context objects are in an "or" relationship.

In the description of the embodiments of the present invention, the term "a plurality of" refers to two or more (including two). Similarly, "multiple groups" refers to two or more groups (including two groups), and "multiple pieces" refers to two or more pieces (including two pieces).

In the description of the embodiments of the present invention, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated device or element must have a specific orientation, be constructed and operate in a specific orientation, and therefore, cannot be understood as a limitation to the present application.

In the description of the embodiments of the present invention, unless otherwise specified and limited, the technical terms "installation", "connection", "connection" and "fixation" should be understood in a broad sense, for example, they can be fixed connection, detachable connection, or integration; or they can be mechanical connection or electrical connection; or they can be direct connection, indirect connection through an intermediate medium, or communication of the interiors of two elements or the relationship of interaction between two elements. For those of ordinary skill in the art, the specific meanings of the above terms in the embodiments of the present application can be understood according to specific situations.

At present, from the perspective of the development of the market situation, power batteries are increasingly more widely used. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. With continuous expansion of the application field of power batteries, market demand is also constantly expanding.

The applicant has noticed that a traditional battery in a vehicle is usually suspended on a side of the vehicle body as an independent sealed unit. A front axle and a rear axle of the vehicle are respectively installed on a beam structure in the vehicle, such as a longitudinal beam of a vehicle frame. Such an arrangement not only makes a vehicle structure complex and increases a vehicle weight, but also greatly limits an overall space of the battery.

Based on this, in order to solve the problem that unreasonable structural arrangement of the vehicle limits the arrangement space of the battery, after in-depth research, the applicant has designed a battery box in which a cantilever structure is arranged on the box body. The cantilever structure is connected to a front axle and/or a rear axle of a vehicle.

The cantilever structure is arranged on the box body, so that a structure capable of being connected to the front axle or rear axle is integrated on the box body, thereby enriching an installation function of the battery box. When the battery box is installed in the vehicle, it is no longer an independent unit suspended under the vehicle body. The battery box uses its own cantilever structure to participate in installation of the front axle or rear axle. In this way, there is no need to add additional beam structures in the vehicle to support the front axle or rear axle, which simplifies a beam structure design in the vehicle and therefore increases the arrangement space for the battery box on the entire vehicle. At the same time, the cantilever structure connected to the front axle or rear axle is integrated into the battery box, thereby making the structural arrangement more compact and being beneficial to reducing the weight of the entire vehicle.

The battery disclosed in the embodiments of the present invention can be used, but not limited to, in electrical apparatus such as a vehicle, a ship, or an aircraft. A battery cell, battery, and the like disclosed in the present application may be used to form a power source system for such an electrical apparatus.

For the convenience of description in the following embodiments, an electrical apparatus being a vehicle 1000 according to an embodiment of the present invention is taken as an example for the description.

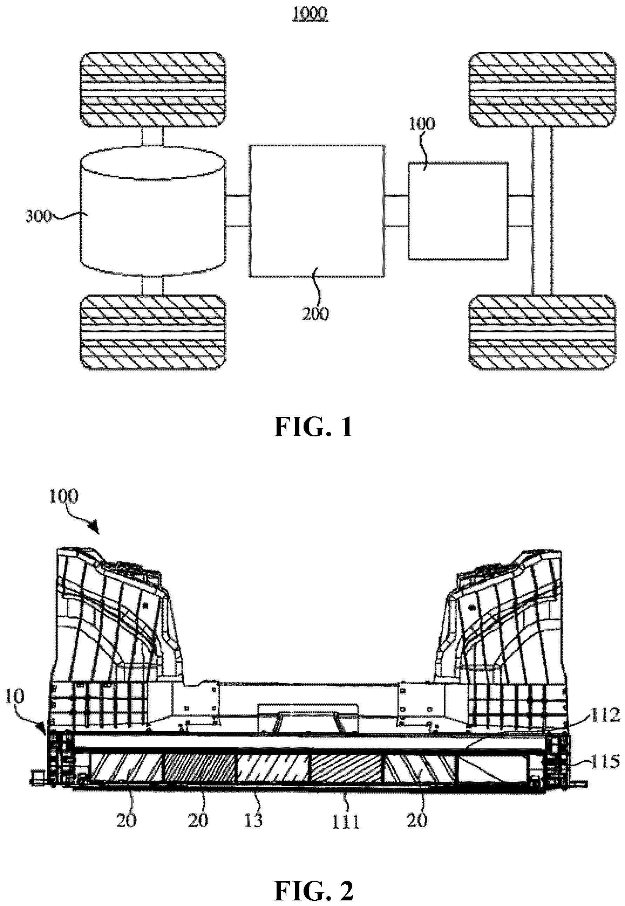

Referring to FIG. 1, FIG. 1 is a schematic diagram of a structure of a vehicle 1000 according to some embodiments of the present invention. The vehicle 1000 may be a new energy vehicle. The new energy vehicle may be an all-electric vehicle, a hybrid vehicle, an extended-range vehicle, or the like. A battery 100 is arranged in the vehicle 1000. The battery 100 may be arranged at a bottom or head or tail of the vehicle 1000. The battery 100 may be used as a power supply for the vehicle 1000, for example, the battery 100 may be used as an operating power source for the vehicle 1000. The vehicle 1000 may further include a controller 200 and a motor 300. The controller 200 is configured to control the battery 100 to supply power to the motor 300, for example, to supply power for starting, navigation and driving of the vehicle 1000.

In some embodiments of the present invention, the battery 100 not only may serve as the operating power supply of the vehicle 1000, but also may serve as a driving power supply of the vehicle 1000, so as to replace or partially replace fuel or natural gas to provide driving power for the vehicle 1000.

Referring to FIG. 2, FIG. 2 is a cross-sectional view of a structure of a battery 100 according to some embodiments of the present invention. The battery 100 includes a box body 11 and a battery cell 20, where the battery cell 20 is accommodated in the box body 11. The box body 11 is configured to provide an accommodating space for the battery cell 20, and the box body 11 may be of various structures. In some embodiments, the box body 11 may include a first portion 111 and a second portion 112, where the first portion 111 and the second portion 112 cover each other, and the first portion 111 and the second portion 112 jointly define the accommodating space for accommodating the battery cell 20. The second portion 112 may be of a hollow structure with one end open, the first portion 111 may be of a plate-like structure, and the first portion 111 covers the open end of the second portion 112, so that the first portion 111 and the second portion 112 jointly define the accommodating space; or the first portion 111 and the second portion 112 may each be of a hollow structure with one end open, and the open end of the first portion 111 covers the open end of the second portion 112. Certainly, the box body 11 formed by the first portion 111 and the second portion 112 may be of a variety of shapes, such as a cylinder, a rectangular solid, or the like.

In the battery 100, there may be a plurality of battery cells 20, and the plurality of battery cells 20 may be connected in series or in parallel or in a mixed connection, and the mixed connection means that the plurality of battery cells 20 are connected both in series and in parallel. The plurality of battery cells 20 may be directly connected together in series or in parallel or in the mixed connection, and then the whole composed of the plurality of battery cells 20 is accommodated in the box body 11. Certainly, the battery 100 may also be a whole formed in a manner that the plurality of battery cells 20 are connected in series or in parallel or in the mixed connection at first to form modules of battery 100, then the plurality of modules of battery 100 are connected in series or in parallel or in the mixed connection, and accommodated in the box body 11. The battery 100 may further include other structures, for example, the battery 100 may further include a bus member for electrically connecting the plurality of battery cells 20.

Each battery cell 20 may be a secondary battery 100 or a primary battery 100, or may be a lithium-sulfur battery 100, a sodium-ion battery 100 or a magnesium-ion battery 100, but is not limited thereto. The battery cell 20 may be in the shape of a cylinder, a flat body, a cuboid or others.

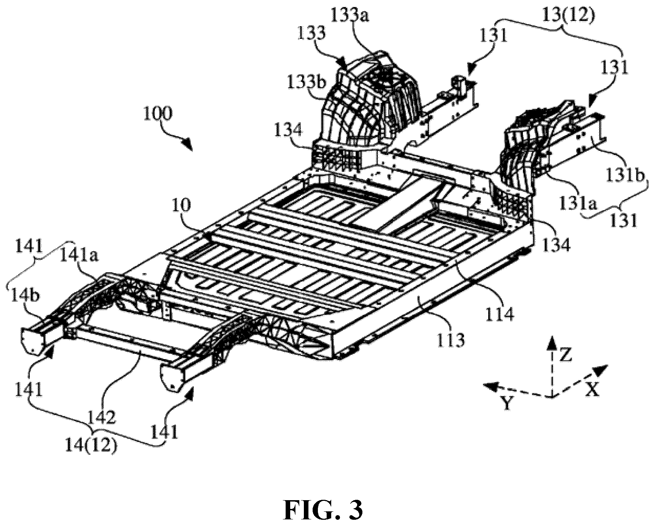

According to some embodiments of the present invention, referring to FIG. 3, the present application provides a battery box 10. The battery box 10 includes a box body 11 and a cantilever structure 12. the interior of the box body 11 is configured to accommodate the battery cell 20. The cantilever structure 12 is arranged on the box body 11, and the cantilever structure 12 is configured to be connected to a front axle and/or rear axle of the vehicle 1000.

The box body 11 refers to a structure with a certain space inside, and can accommodate the battery cell 20 using the space. The shape of the box body 11 may be designed in various ways, for example, the shape of the box body 11 may be designed to be square, round, oval, or the like. The box body 11 includes a first portion 111 and a second portion 112 that cover each other. Certainly, a structure of a frame 115 may be further arranged on the periphery of the first portion 111 and the second portion 112, that is, the first portion 111 and the second portion 112 are connected within the frame 115, or the like.

The cantilever structure 12 refers to a structure with a certain rigidity. When being connected to the front axle or rear axle, the cantilever structure 12 can stably support the front axle or rear axle so that the vehicle 1000 can work normally. There are many options for the material of the cantilever structure 12, such as but not limited to stainless steel, titanium alloy, aluminum alloy, or the like. Certainly, in order to achieve both light weight and high structural strength of the cantilever structure 12, the cantilever structure 12 may be designed to be a structure with a plurality of ribs inside.

A connection manner of the cantilever structure 12 on the box body 11 may be, but is not limited to, bolted connection, clamping, riveting, welding, integrated molding, or the like. The integrated molding may be casting, die casting, forging or other process.

There may be one or a plurality of cantilever structures 12 on the box body 11. When there is only one cantilever structure 12, the cantilever structure 12 is selectively connected to the front axle or rear axle. When there are a plurality of cantilever structures 12, a part of the cantilever structures 12 may be connected to the front axle, and the other part may be connected to the rear axle.

The front axle refers to an apparatus that transmits forces acting in all directions between the vehicle frame and front wheels and bending moment and torque generated by them. The rear axle refers to a rear drive shaft component of the vehicle 1000 for power transmission, which is composed of two half-bridges and can realize half-bridge differential movement. At the same time, the rear axle can be further configured to support rear wheels and an apparatus connecting the rear wheels.

When the battery box 10 is installed in a vehicle 1000, it is no longer an independent unit suspended under the vehicle body. The battery box 10 uses its own cantilever structure 12 to participate in the installation of the front axle or rear axle. In this way, there is no need to add additional beam structures in the vehicle 1000 to support the front axle or rear axle, which simplifies a center beam structure design of the vehicle 1000 and increases the arrangement space of the battery box 10 on the entire vehicle. At the same time, the cantilever structure 12 connected to the front axle or rear axle is integrated into the battery box 10, thereby making the structural arrangement more compact and being beneficial to reducing the weight of the entire vehicle.

According to some embodiments of the present invention, referring to FIG. 3, the cantilever structure 12 is arranged at at least one end of the box body 11 along a first direction X, and the cantilever structure 12 extends along the first direction X and towards a side away from the box body 11.

Relative to the box body 11, the cantilever structure 12 is a structure extending outwards from the box body 11. The cantilever structure 12 extends along the first direction X and towards the side away from the box body 11, which is beneficial to prolonging an overall length of the battery box 10, so that the cantilever structure can better cooperate with the front axle or rear axle.

The cantilever structure 12 extends along the first direction X towards the outside of the box body 11, so that when the battery box 10 is installed on the vehicle 1000, the cantilever structure 12 can extend to the front axle or rear axle, thereby ensuring stable fixation of the front axle or rear axle.

According to some embodiments of the present invention, referring to FIG. 3, the cantilever structure 12 includes a first cantilever structure 1312. The first cantilever structure 1312 is configured to be connected to the front axle.

The cantilever structure 12 includes the first cantilever structure 1312, which should be understood as follows: one of the cantilever structures 12 is the first cantilever structure 1312, and therefore, the first cantilever structure 1312 also has structural properties of the cantilever structure 12. For example: the first cantilever structure 1312 is arranged on one end of the box body 11 along the first direction X, and the first cantilever structure 1312 extends along the first direction X and towards a side away from the box body 11.

The first cantilever structure 1312 is connected to the front axle, so that the front axle is stably fixed to ensure stable operation of the vehicle 1000.

According to some embodiments of the present invention, referring to FIG. 3, the first cantilever structure 1312 includes two first cantilever beams 131. The two first cantilever beams 131 are arranged on the box body 11 at an interval along a second direction Y, the two first cantilever beams 131 are both configured to be connected to the front axle, and the second direction Y intersects with the first direction X.

The first direction X intersects with the second direction Y, which means that the two directions are in different orientations, for example, the first direction X and the second direction Y are vertically arranged.

The two first cantilever beams 131 are arranged on the box body 11 at an interval, and a distance between the two may be determined according to a distance between suspensions on the front axle. At the same time, a connection manner of the first cantilever beam 131 on the box body 11 may be, but is not limited to, clamping, riveting, welding, bolted connection, integrated molding, or the like.

The first cantilever structure 1312 is designed to be the two first cantilever beams 131 that are relatively spaced apart, to be adapted to two suspensions on the front axle, thereby ensuring support balance on the front axle and improving structural stability of the vehicle 1000.

According to some embodiments of the present application, referring to FIG. 3, an installation platform 133 is arranged on each of the first cantilever beams 131. A mating hole 133a is provided in the installation platform 133, and the mating hole 133a is configured to install the front axle.

The installation platform 133 refers to a structure for fixing and installation the front axle, such as the suspension of the front axle. A connection manner of the installation platform on the first cantilever beam 131 may be, but is not limited to, clamping, riveting, welding, bolted connection, integrated molding, or the like. Specifically, in some embodiments, the installation platform 133 is formed by protruding at least a part of the first cantilever beam 131, which is beneficial to reducing a connection stress between the installation platform 133 and the first cantilever beam 131, and improving overall structural strength of the first cantilever structure 1312.

The mating hole 133a is configured to install the front axle, which should be understood as follows: taking installation of the suspension of the front axle as an example, when the suspension is installed on the first cantilever beam 131, one end of the suspension may be inserted into the mating hole 133a at first. Since the dimension of the suspension portion is greater than the dimension of the mating hole 133a, the suspension will not completely pass through the mating hole 133a, but will partially penetrate into the mating hole 133a and then directly abut against the first cantilever beam 131.

The installation platform 133 is arranged on the first cantilever beam 131, and the mating hole 133a is provided in the installation platform 133, so that when being installed on the first cantilever beam 131, the suspension may be installed and positioned by penetrating into the mating hole 133a, which is more convenient to install and operate, and is beneficial to improving assembly efficiency of the entire vehicle.

According to some embodiments of the present invention, referring to FIG. 3, the installation platform 133 is arranged at one end of the first cantilever beam 131 close to the box body 11.

The position of the installation platform 133 on the first cantilever beam 131 may affect torque on the first cantilever beam 131. For example, the farther away from the box body 11 the installation platform is, the greater the torque brought by the front axle on the first cantilever beam 131 will be. On the contrary, the closer to the box body 11 the installation platform is, the smaller the torque will be.

With such a design, the installation platform 133 is arranged at one end of the first cantilever beam 131 close to the box body 11, which is beneficial to reducing the torque of the installation platform 133 on the first cantilever beam 131, and ensuring stable and firm installation of the front axle.

According to some embodiments of the present invention, referring to FIG. 3, a reinforcing rib 133b is arranged on the installation platform 133. The reinforcing rib 133b extends on the surface of the installation platform 133 in a direction away from the first cantilever beam 131.

The reinforcing rib 133b may be fixed on the installation platform 133 by an assembly method such as welding, or may be protruded on the installation platform 133 by an integrated molding method such as die casting or casting.

The reinforcing rib 133b extends in a direction away from the first cantilever beam 131, which can also be understood as follows: the reinforcing rib 133b extends in a protruding direction of the installation platform 133 on the first cantilever beam 131, which is beneficial to strengthening structural strength of the installation platform 133 protruding out of the first cantilever beam 131.

The reinforcing rib 133b is arranged on the installation platform 133, which improves overall structural strength of the installation platform 133, and ensures more stable installation of the front axle.

According to some embodiments of the present invention, referring to FIG. 3, two side surfaces of the box body 11 along the second direction Y are defined as two beam side surfaces 113 respectively. Projections of the two first cantilever beams 131 on the box body 11 along the first direction X are both between the two beam side surfaces 113.

The projections of the two first cantilever beams 131 on the box body 11 along the first direction X are both between the two beam side surfaces 113, which can be understood as follows: after a space formed between the two beam side surfaces 113 extends in the first direction X, the two first cantilever beams 131 are both located in an extended space. Certainly, it may also be understood as follows: the first cantilever beam 131 does not exceed the corresponding beam side surface 113 in the second direction Y. In this case, a distance between the two first cantilever beams 131 is smaller than a distance between the two beam side surfaces 113.

The first cantilever beam 131 is designed not to exceed the corresponding beam side surface 113 in the second direction Y, so that the two first cantilever beams 131 are limited between the two beam side surfaces 113, the transverse dimension of the battery box 10 in the second direction Y is reduced, and the overall structure of the battery box 10 is prevented from becoming bloated.

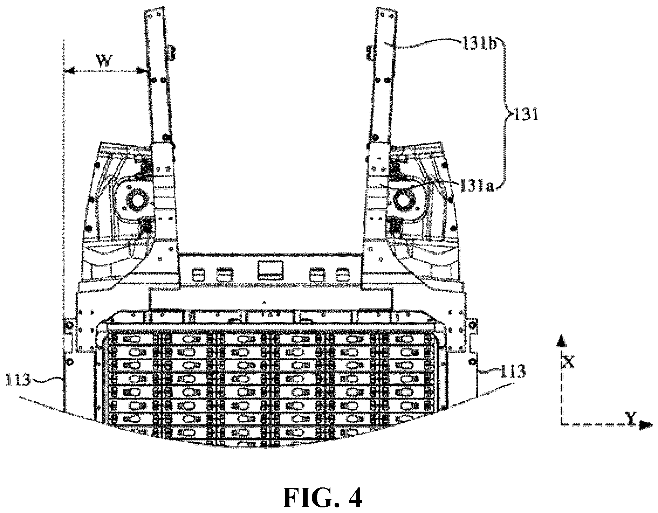

According to some embodiments of the present invention, referring to FIG. 4, a minimum distance between the first cantilever beam 131 and the beam side surface 113 relatively close to the first cantilever beam in the second direction Y is W, and 50 mm ≤ W ≤ 500 mm.

The beam side surface 113 relatively close to the first cantilever beam 131 should be understood as follows: the two first cantilever beams 131 are located in a space between the two beam side surfaces 113, and therefore, any first cantilever beam 131 has a beam side surface 113 that is close to itself and a beam side surface 113 that is far away from itself.

When the distance W between the first cantilever beam 131 and the beam side surface 113 is too large, it means that the two first cantilever beams 131 will be closer, which is not beneficial to dispersion of an impact force along the first direction X, resulting in a decrease in anti-torsion performance of the first cantilever structure 1312. When the distance W between the first cantilever beam 131 and the beam side surface 113 is too small, it means that the first cantilever beam 131 is infinitely close to the beam side surface 113, which will increase a transverse width of the battery box 10 along the second direction Y.

The distance W between the first cantilever beam 131 and the beam side surface 113 may be any value between 50 mm and 500 mm. For example, the distance W may be, but is not limited to, 50 mm, 100 mm, 150 mm, 200 mm, 250 mm, 300 mm, 350 mm, 400 mm, 500 mm, or the like.

The distance W between the first cantilever beam 131 and the beam side surface 113 is rationally controlled, which not only makes the structure more compact, but also is beneficial to improving the anti-torsion performance of the first cantilever structure 1312.

According to some embodiments of the present invention, referring to FIG. 3, a transition portion 134 is connected between the first cantilever beam 131 and the box body 11. The transition portion 134 extends in a circular arc from the first cantilever beam 131 to the beam side surface 113, and the transition portion 134 is recessed towards the first cantilever beam 131.

The transition portion 134 is designed to extend in a circular arc from the first cantilever beam 131 to the beam side surface 113, so that a force on the first cantilever beam 131 can be effectively transferred to a side surface of the box body 11. For example, when the first cantilever beam 131 is subjected to an impact force in the first direction X, the impact force may be transmitted along the transition portion 134 to the beam side surface 113, that is, a side edge of the box body 11, such as a longitudinal beam of the frame 115.

A connection manner of the transition portion 134 between the first cantilever beam 131 and the box body 11 may be, but is not limited to, bolted connection, clamping, riveting, welding, integrated molding, or the like.

The transition portion 134 is designed to transition in a circular arc from the first cantilever beam 131 to the beam side surface 113, which ensures that the force on the first cantilever beam 131 is effectively transferred to the side edge of the box body 11, and avoids a structure of a battery 100 from being damaged and deformed due to the impact force directly acting on the middle of the box body 11.

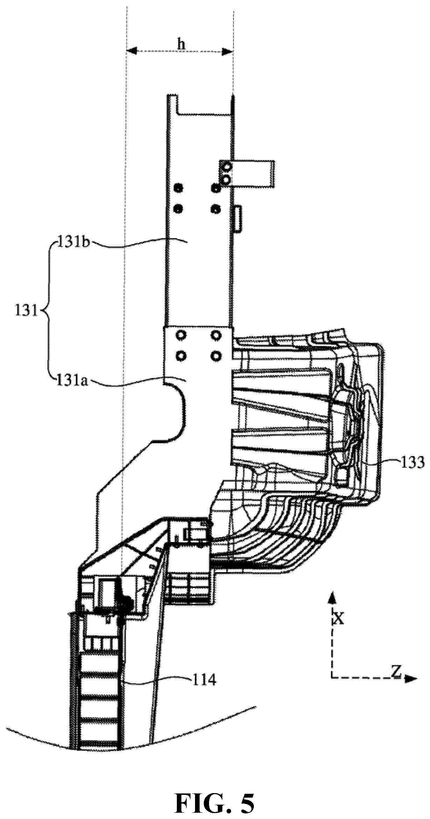

According to some embodiments of the present invention, referring to FIG. 5, the box body 11 includes a beam top surface 114 arranged along a third include direction Z. Each of the first cantilever beams 131 is arranged beyond the beam top surface 114 in the third direction Z, and the first direction X, the second direction Y and the third direction Z intersect with each other.

The first cantilever beam 131 is designed to exceed the beam top surface 114 in the third direction Z, so that a height position of the first cantilever beam is raised, and therefore the suspension on the front axle can be installed on the first cantilever beam 131.

Each two of the first direction X, the second direction Y and the third direction Z intersect with each other. For example, each two of the first direction X, the second direction Y and the third direction Z are perpendicular to each other.

The first cantilever beam is 131 designed to exceed the beam top surface 114, which effectively increases the height of the first cantilever beam 131, makes the suspension on the front axle act on the first cantilever beam 131 more easily, and ensures the structural stability.

According to some embodiments of the present invention, referring to FIG. 5, a distance between the top of the first cantilever beam 131 and the beam top surface 114 is h, and 50 mm ≤ h ≤ 400 mm.

The distance h between the first cantilever beam 131 and the beam top surface 114 may be any value between 50 mm and 400 mm. For example, the distance h may be, but is not limited to, 50 mm, 100 mm, 150 mm, 200 mm, 250 mm, 300 mm, 350 mm, 400 mm, or the like.

The distance h between the first cantilever beam 131 and the beam top surface 114 is reasonably controlled, so that the front axle can be more stably fixed on the first cantilever beam 131, thereby improving the structural stability of the entire vehicle.

According to some embodiments of the present invention, referring to FIG. 3, the first cantilever beam 131 includes a first supporting section 131a and a first mounting section 131b in sequence along the first direction X. The first supporting section 131a is configured to be connected to the front axle. The first mounting section 131b extends in a direction away from the first supporting section 131a.

The first supporting section 131a refers to a structure that can be used for fixing and installation of the front axle and provide stable torsional support therefor. The first mounting section 131b extends in the direction away from the first supporting section 131a and can be used as a mounting point for other equipment, such as a structure for the installation of a front anti-collision beam and/or an energy absorption box, and provide more installation points for the entire vehicle. At the same time, the first mounting section 131b is connected to the box body 11 through the first supporting section 131a. A connection manner between the first mounting section 131b and the first supporting section 131a may be, but is not limited to, bolted connection, clamping, riveting, welding, pinning, integrated molding, or the like.

The front anti-collision beam refers to an apparatus configured to absorb the collision energy when the vehicle 1000 collides. The energy absorption box refers to an important energy absorption apparatus in a bumper system of the vehicle 1000, which exists as a low-speed safety protection system. When the vehicle 1000 collides at a low speed, the energy absorption box effectively absorbs the collision energy and minimizes the damage to the vehicle body caused by an impact force.

The first cantilever beam is 131 designed to be the first supporting section 131a and the first mounting section 131b, so that a supporting function and a mounting function of the first cantilever beam 131 are distributed in different positions, and therefore each function is carried out in an orderly manner and the structural arrangement is more reasonable.

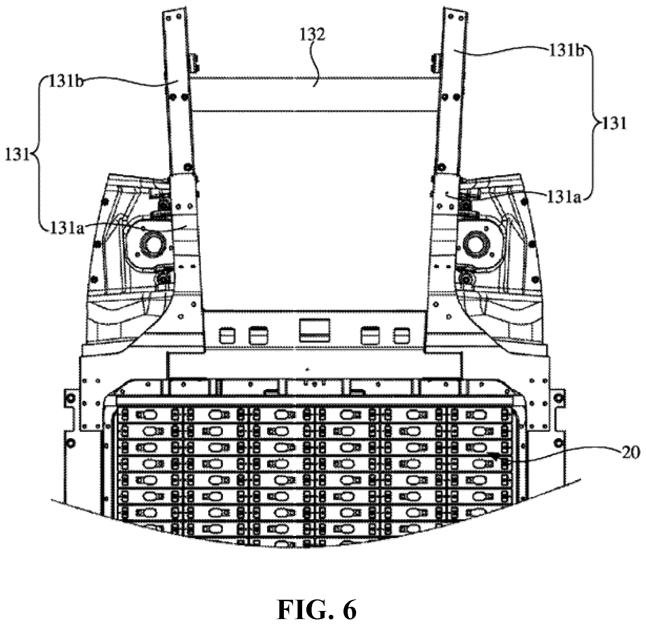

According to some embodiments of the present application, referring to FIG. 6, the first cantilever structure 1312 further includes a first cross beam 132. The first cross beam 132 is connected between the two first cantilever beams 131.

The first cross beam 132 refers to a structure connected between the two first cantilever beams 131, and can provide stable support between the two first cantilever beams 131. A connection manner of the first cross beam 132 on the first cantilever beam 131 may be, but is not limited to, bolted connection, clamping, riveting, welding, pinning, integrated molding, or the like.

The first cross beam 132 is arranged between the two first cantilever beams 131, which provides a supporting force between the two first cantilever beams 131, and is beneficial to improving side collision resistance performance of the first cantilever structure 1312.

According to some embodiments of the present invention in, referring to FIG. 3, the cantilever structure 12 further includes a second cantilever structure 1412. The second cantilever structure 1412 is configured to be connected to the rear axle.

The cantilever structure 12 includes a second cantilever structure 1412, which should be understood as follows: one of the cantilever structures 12 is the second cantilever structure 1412, and therefore, the second cantilever structure 1412 also has the structural properties of the cantilever structure 12. For example: the second cantilever structure 1412 is arranged on one end of the box body 11 along the first direction X, and the second cantilever structure 1412 extends along the first direction X and towards a side away from the box body 11.

The second cantilever structure 1412 is connected to the rear axle, so that the rear axle is stably fixed to ensure the stable operation of the vehicle 1000.

According to some embodiments of the present invention, referring to FIG. 3, the cantilever structure 12 further includes a second cantilever structure 1412. The second cantilever structure 1412 is connected to one end of the box body 11 facing away from the first cantilever structure 1312, and the second cantilever structure 1412 is configured to be connected to the rear axle.

It can be learned that the cantilever structure 12 in this embodiment includes both the first cantilever structure 1312 and the second cantilever structure 1412. The first cantilever structure 1312 and the second cantilever structure 1412 are respectively arranged on two opposite ends of the box body 11 along the first direction X. In this way, both the front axle and the rear axle can be fixedly installed on the battery box 10.

The first cantilever structure 1312 and the second cantilever structure 1412 are arranged on the box body 11 respectively, so that installation positions of the front axle and the rear axle are installed on the box body 11, which greatly simplifies a center beam structure design of the vehicle 1000, and increases the arrangement space of the battery box 10 on the entire vehicle.

According to some embodiments of the present application, referring to FIG. 3, the second cantilever structure 1412 includes two second cantilever beams 141. The two second cantilever beams 141 are arranged on the box body 11 at an interval, and the two second cantilever beams 141 are both configured to be connected to the rear axle.

The two second cantilever beams 141 are arranged on the box body 11 at an interval, and a distance between the two may be determined according to a distance between suspensions on the rear axle. At the same time, a connection manner of the second cantilever beam 141 on the box body 11 may be, but is not limited to, clamping, riveting, welding, bolted connection, integrated molding, or the like.

The second cantilever structure 1412 is designed to be two second cantilever beams 141 that are relatively spaced apart, to be adapted to two suspensions on the rear axle, thereby ensuring support balance on the rear axle and improving the structural stability of the vehicle 1000.

According to some embodiments of the present invention, referring to FIG. 3, the second cantilever structure 1412 further includes a second cross beam 142. The second cross beam 142 is connected between the two second cantilever beams 141.

The second cross beam 142 refers to a structure connected between the two second cantilever beams 141, and can provide stable support between the two second cantilever beams 141. A connection manner of the second cross beam 142 on the second cantilever beam 141 may be, but is not limited to, bolted connection, clamping, riveting, welding, pinning, integrated molding, or the like.

The second cross beam 142 is arranged between the two second cantilever beams 141, which provides a supporting force between the two second cantilever beams 141, and is beneficial to improving side collision resistance performance of the second cantilever structure 1412.

According to some embodiments of the present invention, referring to FIG. 3, the second cantilever structure 1412 includes a second supporting section 141a and a second mounting section 141b in sequence along the first direction X. The second supporting section 141a is configured to be connected to the front axle. The second mounting section 141b extends in a direction away from the second supporting section 141a.

The second supporting section 141a refers to a structure that can be used for fixing and installation of the rear axle and provide stable torsional support therefor. The second mounting section 141b extends in the direction away from the second supporting section 141a and can be used as a mounting point for other equipment, such as a structure for the installation of a rear anti-collision beam and/or an energy absorption box, and provide more installation points for the entire vehicle. At the same time, the second mounting section 141b is connected to the box body 11 through the second supporting section 141a. A connection manner between the second mounting section 141b and the second supporting section 141a may be, but is not limited to, bolted connection, clamping, riveting, welding, pinning, integrated molding, or the like.

The rear anti-collision beam refers to an apparatus configured to absorb the collision energy when the vehicle 1000 collides. The energy absorption box refers to an important energy absorption apparatus in a bumper system of the vehicle 1000, which exists as a low-speed safety protection system. When the vehicle 1000 collides at a low speed, the energy absorption box effectively absorbs the collision energy and minimizes the damage to the vehicle body caused by an impact force.

The second cantilever beam is 141 designed to be the second supporting section 141a and the second mounting section 141b, so that a supporting function and a mounting function of the second cantilever beam 141 are distributed in different positions, and therefore each function is carried out in an orderly manner and the structural arrangement is more reasonable.

According to some embodiments of the present invention, referring to FIG. 3, the present application provides a battery 100, including a battery cell 20 and the battery box 10 of any of the above items, where the battery cell 20 is accommodated in the box body 11.

An installation manner of the battery 100 on the vehicle 1000 may be in a normal installation or an inverted installation. Here, "inverted installation" should be understood as: installing the battery 100 on the vehicle 1000 with the top of the battery facing downward (for example, towards the ground).

According to some embodiments of the present invention, the present invention provides a vehicle 1000, including the above battery 100.

According to some embodiments of the present invention, referring to FIG. 2 to FIG. 6, the present application provides a battery box 10. The box body 10 includes: the first cantilever structure 1312 and the second cantilever structure 1412. The first cantilever structure 1312 may be connected to the front axle of the entire vehicle, and the second cantilever structure 1412 may be connected to the rear axle of the entire vehicle.

Finally, it should be noted that: the above embodiments are merely used to illustrate the technical solutions of the present invention, instead of imposing any limitation on the present invention. Although the present invention has been described in detail with reference to the above embodiments, those with ordinary skills in the art should understand that: the technical solutions disclosed in the above embodiments may be modified within the scope of the invention, defined and limited only by the scope of protection of the appended claims. These modifications and replacements can't depart from the scope of protection of the invention and are thus encompassed within the scope of the claims. In particular, the technical features mentioned in the various embodiments can be combined in any manner as long as there is no structural conflict. The present invention is not limited to the specific embodiments disclosed herein, but rather includes all technical solutions falling within the scope of the claims.

## Claims

1. A battery box (10), comprising:
a box body (11), wherein the interior of the box body (11) is configured to accommodate a battery cell (20);
a cantilever structure (12) arranged on the box body (11), wherein the cantilever structure (12) is configured to be connected to a front axle and/or rear axle of a vehicle (1000),
wherein the cantilever structure (12) is arranged at at least one end of the box body (11) along a first direction X, and the cantilever structure (12) extends along the first direction (X) and towards a side away from the box body (11),
wherein the cantilever structure (12) comprises a first cantilever structure (13), wherein the first cantilever structure (13) is configured to be connected to the front axle, **characterized in that**
wherein the first cantilever structure (13) comprises two first cantilever beams (131), the two first cantilever beams (131) are arranged on the box body (11) at an interval along a second direction (Y), the two first cantilever beams (131) are both configured to be connected to the front axle, and the second direction (Y) intersects with the first direction (X),
wherein an installation platform (133) is arranged on each of the first cantilever beams (131), with a mating hole (133a) being provided in the installation platform (133), and the mating hole (133a) is configured to install the front axle;
wherein the installation platform (133) is arranged at one end of the first cantilever beam (131) close to the box body (11).

2. The battery box (10) according to claim 1, wherein a reinforcing rib (133b) is arranged on the installation platform (133), and the reinforcing rib (133b) extends on the surface of the installation platform (133) in a direction away from the first cantilever beam (131).

3. The battery box (10) according to claim 1, wherein two side surfaces of the box body (11) along the second direction (Y) are defined as two beam side surfaces (113) respectively, and projections of the two first cantilever beams (131) on the box body (11) along the first direction (X) are both between the two beam side surfaces (113).

4. The battery box (10) according to claim 3, wherein a minimum distance between the first cantilever beam (131) and the beam side surface (113) relatively close to the first cantilever beam (131) in the second direction (Y) is W, and 50 mm ≤ W ≤ 500 mm, and/or wherein a transition portion (134) is connected between the first cantilever beam (131) and the box body (11), the transition portion (134) extends in a circular arc from the first cantilever beam (131) to the beam side surface (113), and the transition portion (134) is recessed towards the first cantilever beam (131).

5. The battery box (10) according to claim 1, wherein the box body (11) comprises a beam top surface (114) arranged along a third direction (Z), each of the first cantilever beams (131) is arranged beyond the beam top surface (114) in the third direction (Z), and each two of the first direction (X), the second direction (Y) and the third direction (Z) intersect with each other, preferably wherein a distance between the top of the first cantilever beam (131) and the beam top surface (114) is h, and 50 mm ≤ h ≤ 400 mm.

6. The battery box (10) according to any one of claims 1 to 5, wherein the first cantilever beam (131) comprises a first supporting section (131a) and a first mounting section (131b) in sequence along the first direction (X), the first supporting section (131a) is configured to be connected to the front axle, and the first mounting section (131b) extends in a direction away from the first supporting section (131a), and/or wherein the first cantilever structure (13) further comprises a first cross beam (132), wherein the first cross beam (132) is connected between the two first cantilever beams (131).

7. The battery box (10) according to any one of claims 1 to 6, wherein the cantilever structure (12) further comprises a second cantilever structure (14), and the second cantilever structure (14) is configured to be connected to the rear axle.

8. The battery box (10) according to any one of claims 1 to 6, wherein the cantilever structure (12) further comprises a second cantilever structure (14), the second cantilever structure (14) is connected to one end of the box body (11) facing away from the first cantilever structure (13), and the second cantilever structure (14) is configured to be connected to the rear axle.

9. The battery box (10) according to claim 7 or 8, wherein the second cantilever structure (14) comprises two second cantilever beams (141), the two second cantilever beams (141) are arranged on the box body (11) at an interval, and the two second cantilever beams (141) are both configured to be connected to the rear axle, preferably wherein the second cantilever structure (14) further comprises a second cross beam (142), and the second cross beam (142) is connected between the two second cantilever beams (141), or wherein the second cantilever structure (14) comprises a second supporting section (141a) and a second mounting section (141b) in sequence along the first direction (X), the second supporting section (141a) is configured to be connected to the front axle, and the second mounting section (141b) extends in a direction away from the second supporting section (141a).

10. A battery (100), comprising a battery cell (20) and the battery box (10) according to any one of the claims 1 to 9, wherein the battery cell (20) is accommodated in the box body (11).

11. A vehicle (1000), comprising the battery (100) according to claim 10.

## Patentansprüche

1. Ein Batteriekasten (10), umfassend:
einen Kastenhauptkörper (11), wobei das Innere des Kastenhauptkörpers (11) dazu ausgelegt ist, eine Batteriezelle (20) aufzunehmen;
eine Kragträgerstruktur (12), die an dem Kastenhauptkörper (11) angeordnet ist, wobei die Kragträgerstruktur (12) dazu ausgelegt ist, mit einer Vorderachse und/oder Hinterachse eines Fahrzeugs (1000) verbunden zu werden,
wobei die Kragträgerstruktur (12) an mindestens einem Ende des Kastenhauptkörpers (11) entlang einer ersten Richtung (X) angeordnet ist und die Kragträgerstruktur (12) sich entlang der ersten Richtung (X) und zu einer Seite hin erstreckt, die vom Kastenhauptkörper (11) wegweist,
wobei die Kragträgerstruktur (12) einen ersten Kragträger (13) umfasst, wobei der erste Kragträger (13) dazu ausgelegt ist, mit der Vorderachse verbunden zu werden, **dadurch gekennzeichnet, dass**
wobei der erste Kragträger (13) zwei erste Kragträgerbalken (131) umfasst, die zwei ersten Kragträgerbalken (131) mit Abstand entlang einer zweiten Richtung (Y) auf dem Kastenhauptkörper (11) angeordnet sind, die zwei ersten Kragträgerbalken (131) beide dazu ausgelegt sind, mit der Vorderachse verbunden zu werden, und die zweite Richtung (Y) die erste Richtung (X) schneidet,
wobei auf jedem der ersten Kragträgerbalken (131) eine Installationsplattform (133) angeordnet ist, wobei in der Installationsplattform (133) ein Passloch (133a) vorgesehen ist, und das Passloch (133a) dazu ausgelegt ist, die Vorderachse zu installieren;
wobei die Installationsplattform (133) an einem Ende des ersten Kragträgerbalkens (131) angeordnet ist, das dem Kastenhauptkörper (11) nahe ist.

2. Der Batteriekasten (10) nach Anspruch 1, wobei auf der Installationsplattform (133) eine Verstärkungsrippe (133b) angeordnet ist und die Verstärkungsrippe (133b) sich auf der Oberfläche der Installationsplattform (133) in einer Richtung erstreckt, die vom ersten Kragträgerbalken (131) wegweist.

3. Der Batteriekasten (10) nach Anspruch 1, wobei zwei Seitenflächen des Kastenhauptkörpers (11) entlang der zweiten Richtung (Y) jeweils als zwei Balkenseitenflächen (113) definiert sind und Projektionen der zwei ersten Kragträgerbalken (131) auf den Kastenhauptkörper (11) entlang der ersten Richtung (X) sich jeweils zwischen den zwei Balkenseitenflächen (113) befinden.

4. Der Batteriekasten (10) nach Anspruch 3, wobei ein Mindestabstand zwischen dem ersten Kragträgerbalken (131) und der Balkenseitenfläche (113), die dem ersten Kragträgerbalken (131) in der zweiten Richtung (Y) relativ nahe liegt, W ist und 50 mm ≤ W ≤ 500 mm beträgt, und/oder wobei ein Übergangsabschnitt (134) zwischen dem ersten Kragträgerbalken (131) und dem Kastenhauptkörper (11) verbunden ist, der Übergangsabschnitt (134) sich in einem Kreisbogen vom ersten Kragträgerbalken (131) zur Balkenseitenfläche (113) erstreckt und der Übergangsabschnitt (134) zum ersten Kragträgerbalken (131) hin eingezogen ist.

5. Der Batteriekasten (10) nach Anspruch 1, wobei der Kastenhauptkörper (11) eine entlang einer dritten Richtung (Z) angeordnete Balkenoberfläche (114) umfasst, jeder der ersten Kragträgerbalken (131) über die Balkenoberfläche (114) in der dritten Richtung (Z) hinausragt und jeweils zwei der ersten Richtung (X), der zweiten Richtung (Y) und der dritten Richtung (Z) einander schneiden, vorzugsweise wobei ein Abstand zwischen der Oberseite des ersten Kragträgerbalkens (131) und der Balkenoberfläche (114) h ist und 50 mm ≤ h ≤ 400 mm beträgt.

6. Der Batteriekasten (10) nach einem der Ansprüche 1 bis 5, wobei der erste Kragträgerbalken (131) einen ersten Trägerabschnitt (131a) und einen ersten Montageabschnitt (131b) in dieser Reihenfolge entlang der ersten Richtung (X) umfasst, der erste Trägerabschnitt (131a) dazu ausgelegt ist, mit der Vorderachse verbunden zu werden, und der erste Montageabschnitt (131b) sich in eine Richtung erstreckt, die vom ersten Trägerabschnitt (131a) wegweist, und/oder wobei der erste Kragträger (13) einen ersten Querträger (132) umfasst, wobei der erste Querträger (132) zwischen den zwei ersten Kragträgerbalken (131) verbunden ist.

7. Der Batteriekasten (10) nach einem der Ansprüche 1 bis 6, wobei die Kragträgerstruktur (12) weiterhin einen zweiten Kragträger (14) umfasst und der zweite Kragträger (14) dazu ausgelegt ist, mit der Hinterachse verbunden zu werden.

8. Der Batteriekasten (10) nach einem der Ansprüche 1 bis 6, wobei die Kragträgerstruktur (12) weiterhin einen zweiten Kragträger (14) umfasst, der zweite Kragträger (14) mit einem dem ersten Kragträger (13) abgewandten Ende des Kastenhauptkörpers (11) verbunden ist und der zweite Kragträger (14) dazu ausgelegt ist, mit der Hinterachse verbunden zu werden.

9. Der Batteriekasten (10) nach Anspruch 7 oder 8, wobei der zweite Kragträger (14) zwei zweite Kragträgerbalken (141) umfasst, die zwei zweiten Kragträgerbalken (141) mit Abstand auf dem Kastenhauptkörper (11) angeordnet sind und beide dazu ausgelegt sind, mit der Hinterachse verbunden zu werden, vorzugsweise wobei der zweite Kragträger (14) weiterhin einen zweiten Querträger (142) umfasst und der zweite Querträger (142) zwischen den zwei zweiten Kragträgerbalken (141) verbunden ist, oder wobei der zweite Kragträger (14) einen zweiten Trägerabschnitt (141a) und einen zweiten Montageabschnitt (141b) in dieser Reihenfolge entlang der ersten Richtung (X) umfasst, der zweite Trägerabschnitt (141a) dazu ausgelegt ist, mit der Vorderachse verbunden zu werden, und der zweite Montageabschnitt (141b) sich in eine Richtung erstreckt, die vom zweiten Trägerabschnitt (141a) wegweist.

10. Eine Batterie (100), umfassend eine Batteriezelle (20) und den Batteriekasten (10) nach einem der Ansprüche 1 bis 9, wobei die Batteriezelle (20) im Kastenhauptkörper (11) aufgenommen ist.

11. Ein Fahrzeug (1000), umfassend die Batterie (100) nach Anspruch 10.

## Revendications

1. Une boîte de batterie (10), comprenant :
un corps de boîte (11), l'intérieur du corps de boîte (11) étant configuré pour accueillir une cellule de batterie (20) ;
une structure en porte-à-faux (12) disposée sur le corps de boîte (11), la structure en porte-à-faux (12) étant configurée pour être raccordée à un essieu avant et/ou un essieu arrière d'un véhicule (1000),
la structure en porte-à-faux (12) étant disposée à au moins une extrémité du corps de boîte (11) le long d'une première direction (X), et la structure en porte-à-faux (12) s'étendant le long de la première direction (X) vers un côté éloigné du corps de boîte (11), la structure en porte-à-faux (12) comprenant une première structure en porte-à-faux (13), la première structure en porte-à-faux (13) étant configurée pour être raccordée à l'essieu avant, **caractérisée en ce que**
la première structure en porte-à-faux (13) comprend deux premières poutres en porte-à-faux (131), les deux premières poutres en porte-à-faux (131) étant disposées sur le corps de boîte (11) à intervalles le long d'une seconde direction (Y), les deux premières poutres en porte-à-faux (131) étant toutes deux configurées pour être raccordées à l'essieu avant, et la seconde direction (Y) coupant la première direction (X),
une plateforme d'installation (133) étant disposée sur chacune des premières poutres en porte-à-faux (131), un trou d'accouplement (133a) étant prévu dans la plateforme d'installation (133), et le trou d'accouplement (133a) étant configuré pour installer l'essieu avant ;
la plateforme d'installation (133) étant disposée à une extrémité de la première poutre en porte-à-faux (131) proche du corps de boîte (11).

2. La boîte de batterie (10) selon la revendication 1, dans laquelle une nervure de renforcement (133b) est disposée sur la plateforme d'installation (133), et la nervure de renforcement (133b) s'étend sur la surface de la plateforme d'installation (133) dans une direction éloignée de la première poutre en porte-à-faux (131).

3. La boîte de batterie (10) selon la revendication 1, dans laquelle deux surfaces latérales du corps de boîte (11) le long de la seconde direction (Y) sont définies respectivement comme deux surfaces latérales de poutre (113), et les projections des deux premières poutres en porte-à-faux (131) sur le corps de boîte (11) le long de la première direction (X) se situent toutes deux entre les deux surfaces latérales de poutre (113).

4. La boîte de batterie (10) selon la revendication 3, dans laquelle une distance minimale entre la première poutre en porte-à-faux (131) et la surface latérale de poutre (113) relativement proche de la première poutre en porte-à-faux (131) dans la seconde direction (Y) est W, et 50 mm ≤ W ≤ 500 mm, et/ou dans laquelle une portion de transition (134) est raccordée entre la première poutre en porte-à-faux (131) et le corps de boîte (11), la portion de transition (134) s'étendant en arc de cercle depuis la première poutre en porte-à-faux (131) jusqu'à la surface latérale de poutre (113), et la portion de transition (134) étant en retrait vers la première poutre en porte-à-faux (131).

5. La boîte de batterie (10) selon la revendication 1, dans laquelle le corps de boîte (11) comprend une surface supérieure de poutre (114) disposée le long d'une troisième direction (Z), chacune des premières poutres en porte-à-faux (131) étant disposée au-delà de la surface supérieure de poutre (114) dans la troisième direction (Z), et deux quelconques des première direction (X), seconde direction (Y) et troisième direction (Z) se croisant, de préférence dans laquelle une distance entre le sommet de la première poutre en porte-à-faux (131) et la surface supérieure de poutre (114) est h, et 50 mm ≤ h ≤ 400 mm.

6. La boîte de batterie (10) selon l'une quelconque des revendications 1 à 5, dans laquelle la première poutre en porte-à-faux (131) comprend une première section de support (131a) et une première section de montage (131b) dans cet ordre le long de la première direction (X), la première section de support (131a) étant configurée pour être raccordée à l'essieu avant, et la première section de montage (131b) s'étendant dans une direction éloignée de la première section de support (131a), et/ou dans laquelle la première structure en porte-à-faux (13) comprend un premier longeron transversal (132), le premier longeron transversal (132) étant raccordé entre les deux premières poutres en porte-à-faux (131).

7. La boîte de batterie (10) selon l'une quelconque des revendications 1 à 6, dans laquelle la structure en porte-à-faux (12) comprend en outre une seconde structure en porte-à-faux (14), et la seconde structure en porte-à-faux (14) étant configurée pour être raccordée à l'essieu arrière.

8. La boîte de batterie (10) selon l'une quelconque des revendications 1 à 6, dans laquelle la structure en porte-à-faux (12) comprend en outre une seconde structure en porte-à-faux (14), la seconde structure en porte-à-faux (14) étant raccordée à une extrémité du corps de boîte (11) opposée à la première structure en porte-à-faux (13), et la seconde structure en porte-à-faux (14) étant configurée pour être raccordée à l'essieu arrière.

9. La boîte de batterie (10) selon la revendication 7 ou 8, dans laquelle la seconde structure en porte-à-faux (14) comprend deux secondes poutres en porte-à-faux (141), les deux secondes poutres en porte-à-faux (141) étant disposées sur le corps de boîte (11) à intervalle, et les deux secondes poutres en porte-à-faux (141) étant toutes deux configurées pour être raccordées à l'essieu arrière, de préférence dans laquelle la seconde structure en porte-à-faux (14) comprend en outre un second longeron transversal (142), et le second longeron transversal (142) étant raccordé entre les deux secondes poutres en porte-à-faux (141), ou dans laquelle la seconde structure en porte-à-faux (14) comprend une seconde section de support (141a) et une seconde section de montage (141b) dans cet ordre le long de la première direction (X), la seconde section de support (141a) étant configurée pour être raccordée à l'essieu avant, et la seconde section de montage (141b) s'étendant dans une direction éloignée de la seconde section de support (141a).

10. Une batterie (100), comprenant une cellule de batterie (20) et la boîte de batterie (10) selon l'une quelconque des revendications 1 à 9, la cellule de batterie (20) étant accueillie dans le corps de boîte (11).

11. Un véhicule (1000), comprenant la batterie (100) selon la revendication 10.
